# EUROPEAN PATENT APPLICATION

(11) **EP 4 529 817 A1**
(43) Date of publication of application: **02.04.2025**
(21) Application number: 24202714.2
(22) Date of filing: 25.09.2024
(51) Int. Cl.: A47J 37/06

(54) **COOKING MACHINE**

(30) Priority: 27.09.2023 CN 202322629523 U
(71) Applicant: Foshan Shunde Midea Electrical Heating Appliances Manufacturing Co., Ltd., Foshan, Guangdong 528311 (CN)
(72) Inventor: FU, Zhengting, Shunde, Foshan, 528311 (CN); LI, Longxiang, Shunde, Foshan, 528311 (CN)
(74) Representative: RGTH

(57) **Abstract**

The present disclosure provides a cooking machine, comprising: a shell assembly, and a first chamber and a second chamber are provided in the shell assembly, a first air inlet and a first air outlet are provided in the shell assembly, and any of the first chamber and the second chamber communicates with the first air inlet and the first air outlet; a circuit board, provided in the first chamber; an electromagnetic component, provided in the second chamber, and the electromagnetic component is electrically connected to the circuit board; and a heating component, provided in the shell assembly, and the electromagnetic component is used for driving the heating component to generate heat.

## Description

### FIELD

The present disclosure relates to the field of cooking machines, and particularly relates to a cooking machine.

### BACKGROUND

In the related art, an air fryer comprises an electromagnetic component, a magnetic conductive component and a circuit board. The electromagnetic component drives the magnetic conductive component to heat up, and the circuit board is electrically connected to the electromagnetic component. The electromagnetic component is located at the circuit board, and the heat generated by the electromagnetic component cannot be effectively dissipated, and this results in the relatively high temperature rise of the electromagnetic component and the circuit board.

### SUMMARY

The present disclosure aims to solve at least one of the problems in the prior art or the related art.

Thus, one aspect of the present disclosure provides a cooking machine.

In view of this, one aspect of the present disclosure provides a cooking machine, comprising: a shell assembly, and a first chamber and a second chamber are provided in the shell assembly, a first air inlet and a first air outlet are provided in the shell assembly, and the first air inlet and the first air outlet are communicated through any of the first chamber and the second chamber; a circuit board, provided in the first chamber; an electromagnetic component, provided in the second chamber, and the electromagnetic component is electrically connected to the circuit board; and a heating component, provided in the shell assembly, and the electromagnetic component is used for driving the heating component to generate heat.

The cooking machine provided by the present disclosure comprises the shell assembly, the circuit board, the electromagnetic component and the heating component.

In some embodiments, when the cooking machine works, the electromagnetic component is electrified to generate a magnetic field, the magnetic field acts on the heating component, the heating component heats to generates heat, and the heating component heats and can heat the air to form hot air, and then the hot air is used to cook food materials or disinfect articles.

The shell assembly is provided with the first chamber and the second chamber, the circuit board is provided in the first chamber, the electromagnetic component is provided in the second chamber, and the heating component is provided in the shell assembly.

The circuit board is electrically connected to the electromagnetic component, and the circuit board can limit the electromagnetic component to work.

The first chamber where the circuit board is located is independent from the second chamber where the electromagnetic component is located, i.e., the circuit board and the electromagnetic component are located in different chambers, and in other words, the circuit board and the electromagnetic component are disposed separately, and this can decrease the heat transmitted to the circuit board from the electromagnetic component, reduce the environment temperature at the circuit board, help reduce the temperature rise of the circuit board, and help prolong the service life of the circuit board. Meanwhile, this can decrease the heat transmitted to the electromagnetic component from the circuit board, reduce the environment temperature at the electromagnetic component, help reduce the temperature rise of the electromagnetic component, and help prolong the service life of the electromagnetic component.

Furthermore, the first air inlet and the first air outlet are communicated though any of the first chamber and the second chamber, i.e., the first air inlet and the first air outlet are communicated though the first chamber, and the first air inlet and the first air outlet are communicated though the second chamber.

In some embodiments, when the circuit board is electrified, its temperature is relatively high; the circuit board is provided in the first chamber, the first chamber communicates with the first air inlet in the shell assembly, and the first chamber communicates with the first air outlet in the shell assembly. That is, when the cooking machine works, the air in the environment enters the first chamber from the first air inlet, and is discharged out of the cooking machine through the first air outlet. When flowing through the circuit board, the air can bring the heat at the circuit board, to achieve heat dissipation and cooling effects to the circuit board and reduce the environment temperature at the circuit board, and this helps reduce the temperature rise of the circuit board, and then is beneficial to prolong the service life of the circuit board.

In some embodiments, when the electromagnetic component is electrified, its temperature is relatively high; the electromagnetic component is provided in the second chamber, the second chamber communicates with the first air inlet in the shell assembly, and the second chamber communicates with the first air outlet in the shell assembly. That is, when the cooking machine works, the air in the environment enters the second chamber from the first air inlet, and is discharged out of the cooking machine through the first air outlet. When flowing through the electromagnetic component, the air can bring the heat at the electromagnetic component, to achieve heat dissipation and cooling effects to the electromagnetic component and reduce the environment temperature at the electromagnetic component, and this helps reduce the temperature rise of the electromagnetic component, and is beneficial to prolong the service life of the electromagnetic component.

The above cooking machine according to the present disclosure can further comprise the following additional features:

In some embodiments, the cooking machine further comprises a driving member that is provided in the first chamber, and the driving member is electrically connected to the circuit board; the shell assembly is further provided with a third chamber therein, the cooking machine further comprises a first fan blade, the first fan blade is provided in the third chamber, and the driving member is configured to drive the first fan blade to rotate.

In the embodiment, the cooking machine further comprises the driving member and the first fan blade, and the driving member is configured to drive the first fan blade to rotate.

The driving member is provided in the first chamber, and the first fan blade is provided in the third chamber. That is, the driving member and the first fan blade are located in different chambers, and in other words, the driving member and the first fan blade are arranged separately. The first chamber where the driving member is located is independent from the third chamber where the first fan blade is located, and this can ensure the environment temperature at the driving member and the first fan blade, and helps prolong the service life of the first fan blade and the driving member.

In some embodiments, the heating component forms the first fan blade.

In the embodiment, the structure of the heating component is further defined, and the heating component forms the first fan blade.

In some embodiments, when the cooking machine works, the electromagnetic component is electrified to generate a magnetic field, the magnetic field acts on the first fan blade, the first fan blade heats to generate heat, and the first fan blade heats and can heat the air to form hot air. The driving member drives the first fan blade to rotate and then to drive the hot air to circulate in the third chamber, to achieve the purpose of cooking the food materials in the third chamber, or heating the articles in the third chamber to disinfect the articles. That is, the first fan bade is used as the heating component to heat air to form the hot air.

The electromagnetic component is provided in the second chamber, and the first fan blade is provided in the third chamber. That is, the electromagnetic component and the first fan blade are located in different chambers, and in other words, the electromagnetic component and the first fan blade are arranged separately. The second chamber where the electromagnetic component is located is independent from the third chamber where the first fan blade is located, and this can decrease the heat transmitted to the electromagnetic component from the third chamber, help reduce the environment temperature at the electromagnetic component, help reduce the temperature rise of the electromagnetic component and help prolong the service life of the electromagnetic component.

The driving member is provided in the first chamber, and the first fan blade is provided in the third chamber. That is, the driving member and the first fan blade are located in different chambers, and in other words, the driving member and the first fan blade are arranged separately. The first chamber where the driving member is located is independent from the third chamber where the first fan blade is located, and this can decrease the heat transmitted to the driving member from the third chamber, help reduce the environment temperature at the driving member, help reduce the temperature rise of the driving member and help prolong the service life of the driving member.

That is, the first chamber can conduct heat dissipation for the driving member and the circuit board, the second chamber can conduct heat dissipation for the electromagnetic component, and this provides a structural support for the effectiveness and the reliability of the use of the cooking machine.

In some embodiments, the heating component comprises: a heating plate, provided in the third chamber, and the heating plate is located between the first fan blade and the electromagnetic component.

In the embodiment, the structure of the heating component is further defined, and the heating component further comprises the heating plate, the heating plate is provided in the third chamber and is located between the first fan blade and the electromagnetic component. That is, the electromagnetic component is electrified to generate a magnetic field, the magnetic field acts on the heating plate, the heating plate heats to generate heat, and the heating plate heats and can heat the air to form hot air. The first fan blade works and then can drive the hot air to circulate in the third chamber, to achieve the purpose of cooking the food materials in the third chamber, or heating the articles in the third chamber to disinfect the articles.

In some embodiments, the cooking machine further comprises: a first fan, provided in the shell assembly, and the first fan comprises an air inlet section and an air outlet structure, the air inlet section communicates with the first air inlet, and both the first chamber and the second chamber communicate with the first air inlet through the air outlet structure.

In the embodiment, the structure of the cooking machine is further defined; the cooking machine further comprises the first fan, the first fan comprises the air inlet section and the air outlet structure, the air inlet section communicates with the first air inlet, the first chamber communicates with the first air inlet through the air outlet structure, and the second chamber communicates with the first air inlet through the air outlet structure.

That is, the air in the environment enters the first fan through the first air inlet, a portion of the air flows into the first chamber through the air outlet structure, to dissipate heat for the circuit board and the driving member in the first chamber, and the other portion of the air flows into the second chamber through the air outlet structure, to dissipate heat for the electromagnetic component in the second chamber.

In some embodiments, the air outlet structure comprises a first air outlet section and a second air outlet section; the second chamber communicates with the first air outlet section, and a portion of the first air outlet section is arranged opposite to the driving member; and the second air outlet section is arranged opposite to the circuit board.

In the embodiment, the air outlet structure is defined in details, and the air outlet structure comprises the first air outlet section and the second air outlet section, the second chamber communicates with the first air outlet section, and a portion of the first air outlet section is arranged opposite to the driving member; and the second air outlet section is arranged opposite to the circuit board. That is, the air in the environment enters the first fan through the first air inlet, a portion of the air flows into both the second chamber and the driving member through the first air outlet section, and the other portion of the air flows to the circuit board through the second air outlet section, to cool and reduce the temperature for the driving member, the circuit board and the electromagnetic component at the same time.

In some embodiments, the first air outlet section comprises the first air outlet, and the second air outlet section comprises a second air outlet.

In some embodiments, the second chamber is located between the first chamber and the third chamber.

In the embodiment, the cooperating structures of the first chamber, the second chamber and the third chamber are further defined, and the second chamber is located between the first chamber and the third chamber, and this arrangement facilitates the mounting and fixing of the driving member, the circuit board, the electromagnetic component and the first fan blade, provides effective and reliable structural support for the driving member to drive the first fan blade to rotate through a driving shaft, and can ensure an effective connection between the circuit board and the driving member.

In some embodiments, a second air inlet is further provided in shell assembly; the cooking machine further comprises a second fan, the second fan is provided in the first chamber, and the second air inlet and the first chamber are communicated though the second fan.

In the embodiment, the structure of the cooking machine is further defined, the second air inlet is further provided in shell assembly; the cooking machine further comprises the second fan, the second fan communicates with the second air inlet, and the second fan communicates with the first chamber.

That is, the second fan works and can drive the air in the environment to enter the first chamber through the second air inlet, and the air is discharged out of the cooking machine through the first air outlet. When flowing through the driving member and the circuit board in the first chamber, the air can bring the heat at the driving member and the circuit board, to achieve the heat dissipating and cooling effects to the driving member and the circuit board, and then reduce the environment temperature at the driving member and the circuit board, and this helps reduce the temperature rise of the driving member and the circuit board, and further helps prolong the service life of the driving member and the circuit board.

In some embodiments, the second fan is an axial-flow fan.

In some embodiments, the second fan is located between the second air inlet and the driving member.

In the embodiment, the cooperating structures of the second fan, the second air inlet and the driving member are further defined, and the second fan is located between the second air inlet and the driving member, i.e., the second fan is located on the top portion of the driving member, to achieve the purpose of dissipating heat for the top portion of the driving member. The arrangement is beneficial to shorten the distance between the second air inlet and the driving member, and the cold air entering the first chamber through the second air inlet can rapidly contact the driving member, and this helps reduce cooling loss and helps improve the heat dissipation efficiency of the driving member.

In some embodiments, the shell assembly is further provided with the second air outlet; the cooking machine further comprises a third fan, the third fan is provided in the first chamber, and the first chamber and the second air outlet are communicated though the third fan.

In the embodiment, the structure of the cooking machine is further defined, the shell assembly is further provided with the second air outlet; the cooking machine further comprises the third fan, the third fan communicates with the second air outlet, and the third fan communicates with the first chamber.

That is, the third fan works and can drive the air in the first chamber to be discharged out of the cooking machine through the second air outlet. When flowing through the driving member and the circuit board in the first chamber, the air can bring the heat at the driving member and the circuit board, to achieve the heat dissipating and cooling effects to the driving member and the circuit board, and then reduce the environment temperature at the driving member and the circuit board, and this helps reduce the temperature rise of the driving member and the circuit board, and further helps prolong the service life of the driving member and the circuit board.

That is, the third fan works and can blow air to the second air outlet through the first chamber, to dissipate heat for the driving member and the circuit board.

In some embodiments, the driving member is located between the third fan and the first fan blade, and the second air outlet is located at the side portion of the third fan.

In the embodiment, the cooperating structures of the third fan, the second air outlet and the driving member are further defined, and the driving member is located between the third fan and the first fan blade, and the second air outlet is located at the side portion of the third fan. That is, the third fan is located on the top portion of the driving member, to achieve the purpose of dissipating heat for the top portion of the driving member. The arrangement is beneficial to shorten the distance between the second air outlet and the driving member, and helps improve the heat dissipation efficiency of the driving member.

In addition, the second air outlet is located at the side portion of the third fan, and this arrangement can ensure the aesthetic and streamlined appearance of a product.

In some embodiments, the cooking machine further comprises: a driving shaft, and the first end of the driving shaft is connected to the driving member, the second end of the driving shaft passes through the second chamber and extends into the third chamber, and is connected to the first fan blade; a second fan blade, located in the first chamber, and the second fan blade is connected to the driving shaft, and the second fan blade is located between the driving member and the electromagnetic component; the shell assembly is further provided with a third air outlet, the third air outlet communicates with the first chamber, and from the second fan blade to the driving member, at least a portion of the third air outlet is located above the driving member.

In the embodiment, the structure of the cooking machine is further defined, and the cooking machine further comprises the driving shaft and the second fan blade.

The driving shaft comprises the first end and the second end, the first end of the driving shaft is connected to the driving member, the second end of the driving shaft passes through the second chamber and extends into the third chamber, and is connected to the first fan blade. The driving member drives the driving shaft to rotate, and the rotating of the driving shaft can bring the first fan blade and the second fan blade to rotate.

The rotating of the driving shaft can bring the first fan blade to rotate, the rotating of the first fan blade can drive the hot air to circulate in the third chamber, to achieve the purpose of cooking the food materials in the third chamber, or heating the articles in the third chamber to disinfect the articles.

The rotating of the driving shaft can bring the second fan blade to rotate, and the rotating of the second fan blade can drive the airflow in the first chamber to flow to the third air outlet; when flowing through the driving member and the circuit board in the first chamber, the airflow can bring the heat at the driving member and the circuit board, to achieve the heat dissipating and cooling effects to the driving member and the circuit board, and to reduce the environment temperature at the driving member and the circuit board, and this helps reduce the temperature rise of the driving member and the circuit board, and further helps prolong the service life of the driving member and the circuit board.

In addition, at least a portion of the third air outlet is located above the driving member, to achieve the purpose of dissipating heat for the top portion of the driving member. The arrangement is beneficial to shorten the distance between the third air outlet and the driving member, and helps improve the heat dissipation efficiency of the driving member.

In some embodiments, the first fan blade comprises: a flow guide plate, and the flow guide plate is provided with a mounting part, and the driving member is connected to the mounting part; a plurality of blades, and the plurality of blades are connected to the side of the flow guide plate away from the electromagnetic component, and the plurality of blades are arranged separately along the circumferential direction of the mounting part; a convex rib, and the convex rib and the plurality of blades are provided at the same side of the flow guide plate.

In the embodiment, the structure of the first fan blade is further defined, and the first fan blade comprises the flow guide plate, the plurality of blades and the convex rib.

The flow guide plate is provided with the mounting part, the mounting part is configured to cooperate with the driving member, and the driving member drives the first fan blade to rotate by the mounting part.

The plurality of blades are connected to the side of the flow guide plate away from the electromagnetic component, and the convex rib and the plurality of blades are provided at the same side of the flow guide plate. That is, the flow guide plate is used as a mounting carrier of the plurality of blades and the convex rib, and has the function of mounting and fixing the plurality of blades and the convex rib.

The convex rib cooperates with the flow guide plate, to form a convex-concave structure, and in the case of ensuring that overlapping area between the electromagnetic component and the flow guide plate is not changed, the arrangement increases the integral heat dissipation area of the first fan blade, and thus, can improve the heat exchanging efficiency between the first fan blade and the air, can further improve the heat dissipation of the first fan blade, and helps improve the cooking efficiency or the disinfection efficiency of the cooking machine.

In some embodiments, the convex rib is a ring-shaped structure arranged surrounding the mounting part; there are a plurality of convex ribs, and the plurality of convex ribs are arranged separately from the mounting part to the outer edge of the flow guide plate.

In the embodiment, the structure and the number of the convex rib are further defined.

In some embodiments, the convex rib is the ring-shaped structure arranged surrounding the mounting part, i.e., the convex rib is a ring-shaped structure, and the convex ribs are arranged surrounding the mounting part.

In addition, there are a plurality of convex ribs, and the plurality of convex ribs are arranged separately in a direction from the mounting part to the outer edge of the flow guide plate.

The plurality of convex ribs cooperates with the side of the flow guide plate deviating from the electromagnetic component, to form a plurality of circles of convex-concave structures. Thus, in the case of ensuring that the overlapping area between the electromagnetic component and the flow guide plate is not changed, the integral heat dissipation area of the first fan blade is increased, and this can enhance the heat exchanging efficiency between the first fan blade and the air, and further improve the heat dissipation of the first fan blade, and thus the cooking effect is optimized through improving the heat dissipation efficiency, and this helps improve the cooking efficiency or the disinfection efficiency of the cooking machine.

In some embodiments, the convex rib is provided with a plurality of avoiding ports, each blade is inserted into one avoiding port.

In the embodiment, the structure of the convex rib is further defined, and the convex rib is provided with the plurality of avoiding ports. In addition, the cooperating structure of the convex ribs and the plurality of blades is that each blade is inserted into one avoiding port, the avoiding port has the function of avoiding the blades and the blades can be effectively attached to the flow guide plate, and this can ensure the consistency of the heights of the plurality of blades, ensure the matching sizes of the plurality of blades and the flow guide plate, and then the situation will not appear that part of the blades interfere with other components of the cooking machine due to the too large assembly height of such blades, and reliable structural support is provided for the effective and smooth rotation of the first fan blade.

In some embodiments, each blade is arranged bending along the counterclockwise direction.

In the embodiment, the structure of the blade is further defined, each blade is arranged bending along the counterclockwise direction. The arrangement can increase the contact area between the blade and the air, facilitate fully disturbing airflow, make the air sufficiently contact the first fan blade, and then help improve the efficiency of heating the air.

In some embodiments, the shell assembly comprises: a first cover body; a support plate, connected to the first cover body, and the support plate is provided with an opening; a heat insulation plate, provided on the support plate, and the heat insulation plate covers the opening, the first cover body, the support plate and the heat insulation plate enclose the second chamber, and the heat insulation plate is located between the electromagnetic component and the first fan blade.

In the embodiment, the structure of the shell assembly is further detailed, and the shell assembly comprises the first cover body, the support plate and the heat insulation plate.

The support plate is connected to the first cover body, the heat insulation plate is provided on the support plate, and the heat insulation plate covers the opening. The support plate is used as the mounting carrier of the heat insulation plate and has the function of mounting and fixing the heat insulation plate, and the first cover body, the support plate and the heat insulation plate enclose the second chamber.

It is understandable that the heat insulation plate is located between the electromagnetic component and the first fan blade, the heat insulation plate has a heat insulating function and reduces the heat transmitted to the second chamber from the first fan blade, and this helps reduce the environment temperature at the electromagnetic component, and helps prolong the service life of the electromagnetic component. In addition, the heat insulation plate can further insulate the oil fume produced during cooking, and thus reduce the probability of the occurrence that oil adheres to the electromagnetic component.

In some embodiments, the heat insulation plate is a non-magnetic conductive material, for example, mica, glass or microcrystalline materials, etc. The heat insulation plate is a non-magnetic conductive material and thus can reduce the interference to the magnetic field, and provide a structural support for the effective heating of the first fan blade.

In some embodiments, the shell assembly further comprises: a second cover body, connected to the first cover body, and the second cover body and the first cover body enclose the first chamber, the first air inlet is provided in the second cover body, and the first cover body and the second cover body enclose the first air outlet.

In the embodiment, the shell assembly further comprises the second cover body, the second cover body is connected to the first cover body, the second cover body is connected to the outer side of the first cover body.

The second cover body and the first cover body enclose the first chamber, i.e., the driving member is located between the first cover body and the second cover body, that is, the driving member is arranged away from the first fan blade, and this arrangement can reduce the heat transmitted to the driving member, reduce the environment temperature at the driving member, help reduce the temperature rise of the driving member, and facilitate prolonging the service life of the driving member.

In some embodiments, the shell assembly further comprises: a protective cover, located in the third chamber, and the protective cover is connected to the support plate, the protective cover and the support plate enclose a mounting chamber, the first fan blade is located in the mounting chamber, and the protective cover is provided with an overflow port.

In the embodiment, the structure of the shell assembly is further defined, the shell assembly further comprises the protective cover, the protective cover is located in the third chamber, and the protective cover is connected to the support plate.

That is, the protective cover cooperates with the support plate, to enclose the mounting chamber for accommodating the first fan blade.

The protective cover is provided with the overflow port, the overflow port communicates with the third chamber and the mounting chamber, and can ensure the circulation of hot air in the third chamber.

It is understandable that the protective cover is connected to the support plate, to divide the mounting chamber for accommodating the first fan blade from the internal space of the third chamber, and this arrangement has a protecting function for the first fan blade and can further ensure the circulation of the hot air in the third chamber.

In some embodiments, the cooking machine comprises an air fryer or an air oven.

In the embodiment, the types of the cooking machine are further defined, the cooking machine comprises the air fryer or the air oven.

The additional aspects and advantages of the present disclosure will be obvious in the following description, or can be understood through the implementation of the present disclosure.

### BRIEF DESCRIPTION OF THE DRAWINGS

The above and/or additional aspects and advantages of the present disclosure will be obvious and understood easily from the following description of the embodiments in combination with the accompanying drawings.
FIG. 1 is a schematic view of the structure of a first portion of a cooking machine according to the first embodiment of the present disclosure;
FIG.2 is a schematic view of the structure of a second portion of a cooking machine according to the first embodiment of the present disclosure;
FIG.3 is a schematic view of the structure of a third portion of a cooking machine according to the first embodiment of the present disclosure;
FIG.4 is a schematic view of the structure of a fourth portion of a cooking machine according to the first embodiment of the present disclosure;
FIG.5 is a schematic view of the structure of a first fan according to the first embodiment of the present disclosure;
FIG.6 is a schematic view of part of the structure of a cooking machine according to the second embodiment of the present disclosure;
FIG.7 is a schematic view of the structure of a first fan blade of the cooking machine as shown in FIG. 6 from a first view angle;
FIG.8 is a schematic view of the structure of the first fan blade of the cooking machine as shown in FIG. 6 from a second view angle;
FIG.9 is a schematic view of the structure of the first fan blade of the cooking machine as shown in FIG. 6 from a third view angle;
FIG.10 is a schematic view of part of the structure of a cooking machine according to the third embodiment of the present disclosure;
FIG.11 is a schematic view of part of the structure of a cooking machine according to the fourth embodiment of the present disclosure;
FIG.12 is a schematic view of part of the structure of a cooking machine according to the fifth embodiment of the present disclosure; and
FIG.13 is a schematic view of the structures of a heating plate, a first fan blade and an electromagnetic component according to an embodiment of the present disclosure.

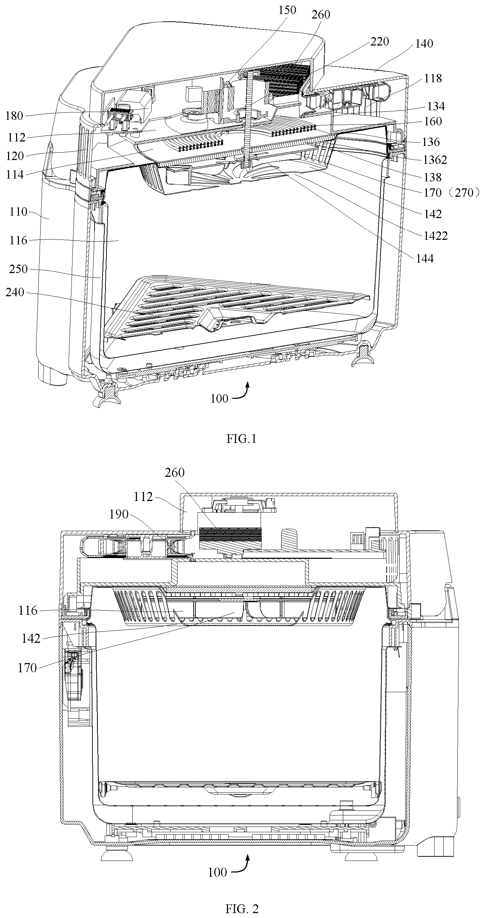

The corresponding relationships between the reference signs and the component names in FIG. 1 to FIG. 13 are as follows:
100: cooking machine, 110: shell assembly, 112: first chamber, 114: second chamber, 116: third chamber, 118: first air inlet, 120: first air outlet, 128: second air inlet, 130: second air outlet, 132: third air outlet, 134: first cover body, 1342: upper air vent, 1344: lower air vent, 1346: exit, 136: support plate, 1362: opening, 138: heat insulation plate, 140: second cover body, 142: protective cover, 1422: overflow port, 144: mounting chamber, 150: driving member, 160: electromagnetic component, 170: first fan blade, 172: flow guide plate, 174: mounting part, 176: blade, 178: convex rib, 179: avoiding port, 180: circuit board, 190: first fan, 192: air inlet section, 194: first air outlet section, 196: second air outlet section, 198: air outlet structure, 200: second fan, 210: third fan, 220: driving shaft, 230: second fan blade, 240: carriage member, 250: base body, 260: heat sink, 270: heating component, 280: heating plate.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the embodiments disclosed in the following text.

A cooking machine 100 according to some embodiments of the present disclosure are described in the following by referring to FIG. 1 to FIG. 13.

As shown in FIG. 1 and FIG. 2, a cooking machine 100 according to some embodiments of the present disclosure comprises: a shell assembly 110, and a first chamber 112 and a second chamber 114 are provided in the shell assembly 110, a first air inlet 118 and a first air outlet 120 are provided in the shell assembly 110, and any of the first chamber 112 and the second chamber 114 communicates with the first air inlet 118 and the first air outlet 120; a circuit board 180, provided in the first chamber 112; an electromagnetic component 160, provided in the second chamber 114, and the electromagnetic component 160 is electrically connected to the circuit board 180; and a heating component 270, provided in the shell assembly 110, and the electromagnetic component 160 is used for driving the heating component 270 to generate heat.

In the embodiment, the cooking machine 100 comprises the shell assembly 110, the circuit board 180, the electromagnetic component 160 and the heating component 270.

In some embodiments, when the cooking machine 100 works, the electromagnetic component 160 is electrified to generate a magnetic field, the magnetic field acts on the heating component 270, the heating component 270 heats to generates heat, and the heating component 270 heats and can heat the air to form hot air, and then the hot air is configured to cook food materials or disinfect articles.

The shell assembly 110 is provided with the first chamber 112 and the second chamber 114, the circuit board 180 is provided in the first chamber 112, the electromagnetic component 160 is provided in the second chamber 114, and the heating component 270 is provided in the shell assembly 110. The circuit board 180 is electrically connected to the electromagnetic component 160, and the circuit board 180 can limit the electromagnetic component 160 to work.

The first chamber 112 where the circuit board 180 is located is independent from the second chamber 114 where the electromagnetic component 160 is located, i.e., the circuit board 180 and the electromagnetic component 160 are located in different chambers, and in other words, the circuit board 180 and the electromagnetic component 160 are disposed separately, and this can decrease the heat transmitted to the circuit board 180 from the electromagnetic component 160, reduce the environment temperature at the circuit board 180, help reduce the temperature rise of the circuit board 180, and help prolong the service life of the circuit board 180. Meanwhile, this can decrease the heat transmitted to the electromagnetic component 160 from the circuit board 180, reduce the environment temperature at the electromagnetic component 160, help reduce the temperature rise of the electromagnetic component 160, and help prolong the service life of the electromagnetic component 160.

Furthermore, any of the first chamber 112 and the second chamber 114 communicates with the first air inlet 118 and the first air outlet 120, i.e., the first chamber 112 communicates with the first air inlet 118 and the first air outlet 120, and the second chamber 114 communicates with the first air inlet 118 and the first air outlet 120.

In some embodiments, when the circuit board 180 is electrified, its temperature is relatively high; the circuit board 180 is provided in the first chamber 112, the first chamber 112 communicates with the first air inlet 118 in the shell assembly 110, and the first chamber 112 communicates with the first air outlet 120 in the shell assembly 110. That is, when the cooking machine 100 works, the air in the environment enters the first chamber 112 from the first air inlet 118, and is discharged out of the cooking machine 100 through the first air outlet 120. When flowing through the circuit board 180, the air can bring the heat at the circuit board 180, to achieve heat dissipation and cooling effects to the circuit board 180 and reduce the environment temperature at the circuit board 180, and this helps reduce the temperature rise of the circuit board 180, and then is beneficial to prolong the service life of the circuit board 180.

In some embodiments, when the electromagnetic component 160 is electrified, its temperature is relatively high; the electromagnetic component 160 is provided in the second chamber 114, the second chamber 114 communicates with the first air inlet 118 in the shell assembly 110, and the second chamber 114 communicates with the first air outlet 120 in the shell assembly 110. That is, when the cooking machine 100 works, the air in the environment enters the second chamber 114 from the first air inlet 118, and is discharged out of the cooking machine 100 through the first air outlet 120. When flowing through the electromagnetic component 160, the air can bring the heat at the electromagnetic component 160, to achieve heat dissipation and cooling effects to the electromagnetic component 160 and reduce the environment temperature at the electromagnetic component 160, and this helps reduce the temperature rise of the electromagnetic component 160, and is beneficial to prolong the service life of the electromagnetic component 160.

In some embodiments, the heating component 270 is an iron member. Or the heating component 270 is an iron alloy member, for example, a low carbon steel member, an iron casting member, an iron-aluminum alloy member or an iron-nickel alloy member, etc., which are not listed herein one by one.

In some embodiments, as shown in FIG. 1 and FIG. 2, the cooking machine 100 further comprises a driving member 150 that is provided in the first chamber 112, and the driving member 150 is electrically connected to the circuit board 180; the shell assembly 110 is further provided with a third chamber 116 therein, the cooking machine 100 further comprises a first fan blade 170, the first fan blade 170 is provided in the third chamber 116, and the driving member 150 is configured to drive the first fan blade 170 to rotate.

In the embodiment, the cooking machine 100 further comprises the driving member 150 and the first fan blade 170, and the driving member 150 is configured to drive the first fan blade 170 to rotate.

The driving member 150 is provided in the first chamber 112, and the first fan blade 170 is provided in the third chamber 116. That is, the driving member 150 and the first fan blade 170 are located in different chambers, and in other words, the driving member 150 and the first fan blade 170 are arranged separately. The first chamber 112 where the driving member 150 is located is independent from the third chamber 116 where the first fan blade 170 is located, and this can ensure the environment temperature at the driving member 150 and the first fan blade 170, and helps prolong the service life of the first fan blade 170 and the driving member 150.

In some embodiments, as shown in FIG. 1, the heating component 270 forms the first fan blade 170.

In the embodiment, the structure of the heating component 270 is further defined, and the heating component 270 forms the first fan blade 170.

In some embodiments, when the cooking machine 100 works, the electromagnetic component 160 is electrified to generate a magnetic field, the magnetic field acts on the first fan blade 170, the first fan blade 170 heats to generate heat, and the first fan blade 170 heats and can heat the air to form hot air. The driving member 150 drives the first fan blade 170 to rotate and then to drive the hot air to circulate in the third chamber 116, to achieve the purpose of cooking the food materials in the third chamber 116, or heating the articles in the third chamber 116 to disinfect the articles. That is, the first fan bade 170 is used as the heating component 270 to heat air to form the hot air.

The electromagnetic component 160 is provided in the second chamber 114, and the first fan blade 170 is provided in the third chamber 116. That is, the electromagnetic component 160 and the first fan blade 170 are located in different chambers, and in other words, the electromagnetic component 160 and the first fan blade 170 are arranged separately. The second chamber 114 where the electromagnetic component 160 is located is independent from the third chamber 116 where the first fan blade 170 is located, and this can decrease the heat transmitted to the electromagnetic component 160 from the third chamber 116, help reduce the environment temperature at the electromagnetic component 160, help reduce the temperature rise of the electromagnetic component 160 and help prolong the service life of the electromagnetic component 160.

The driving member 150 is provided in the first chamber 112, and the first fan blade 170 is provided in the third chamber 116. That is, the driving member 150 and the first fan blade 170 are located in different chambers, and in other words, the driving member 150 and the first fan blade 170 are arranged separately. The first chamber 112 where the driving member 150 is located is independent from the third chamber 116 where the first fan blade 170 is located, and this can decrease the heat transmitted to the driving member 150 from the third chamber 116, help reduce the environment temperature at the driving member 150, help reduce the temperature rise of the driving member 150 and help prolong the service life of the driving member 150.

That is, the first chamber 112 can conduct heat dissipation for the driving member 150 and the circuit board 180, the second chamber 114 can conduct heat dissipation for the electromagnetic component 160, and this provides a structural support for the effectiveness and the reliability of the use of the cooking machine 100.

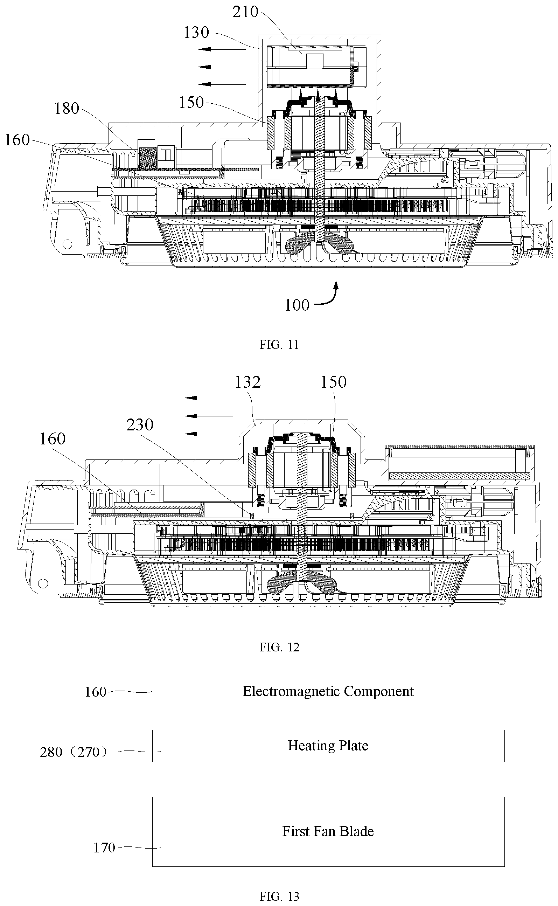

In some embodiments, as shown in FIG. 13, the heating component 270 comprises: a heating plate 280, provided in the third chamber 116, and the heating plate 280 is located between the first fan blade 170 and the electromagnetic component 160.

In the embodiment, the structure of the heating component 270 is further defined, and the heating component 270 further comprises the heating plate 280, the heating plate 280 is provided in the third chamber 116 and is located between the first fan blade 170 and the electromagnetic component 160. That is, the electromagnetic component 160 is electrified to generate a magnetic field, the magnetic field acts on the heating plate 280, the heating plate 280 heats to generate heat, and the heating plate 280 heats and can heat the air to form hot air. The first fan blade 170 works and then can drive the hot air to circulate in the third chamber 116, to achieve the purpose of cooking the food materials in the third chamber 116, or heating the articles in the third chamber 116 to disinfect the articles.

In some embodiments, the heating plate 280 is magnetic conductive component.

In some embodiments, as shown in FIG. 1, FIG. 3 and FIG. 5, the cooking machine 100 further comprises: a first fan 190, provided in the shell assembly 110, and the first fan 190 comprises an air inlet section 192 and an air outlet structure 198, the air inlet section 192 communicates with the first air inlet 118, and both the first chamber 112 and the second chamber 114 communicate with the first air inlet 118 through the air outlet structure 198.

In the embodiment, the structure of the cooking machine 100 is further defined; the cooking machine 100 further comprises the first fan 190, the first fan 190 comprises the air inlet section 192 and the air outlet structure 198, the air inlet section 192 communicates with the first air inlet 118, the first chamber 112 communicates with the first air inlet 118 through the air outlet structure 198, and the second chamber 114 communicates with the first air inlet 118 through the air outlet structure 198.

That is, the air in the environment enters the first fan 190 through the first air inlet 118, a portion of the air flows into the first chamber 112 through the air outlet structure 198, to dissipate heat for the circuit board 180 and the driving member 150 in the first chamber 112, and the other portion of the air flows into the second chamber 114 through the air outlet structure 198, to dissipate heat for the electromagnetic component 160 in the second chamber 114.

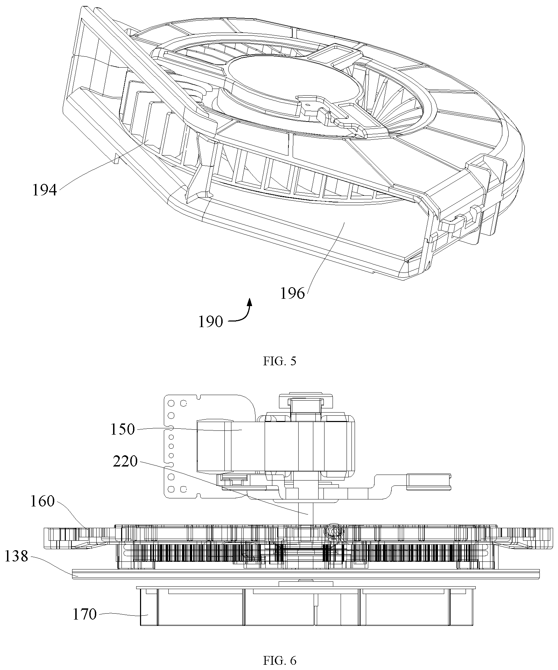

In some embodiments, as shown in FIG. 1 and FIG. 5, the air outlet structure 198 comprises a first air outlet section 194 and a second air outlet section 196; the second chamber 114 communicates with the first air outlet section 194, and a portion of the first air outlet section 194 is arranged opposite to the driving member 150; and the second air outlet section 196 is arranged opposite to the circuit board 180.

In the embodiment, the air outlet structure 198 is defined in details, and the air outlet structure 198 comprises the first air outlet section 194 and the second air outlet section 196, the second chamber 114 communicates with the first air outlet section 194, and a portion of the first air outlet section 194 is arranged opposite to the driving member 150; and the second air outlet section 196 is arranged opposite to the circuit board 180. That is, the air in the environment enters the first fan 190 through the first air inlet 118, a portion of the air flows into both the second chamber 114 and the driving member 150 through the first air outlet section 194, and the other portion of the air flows to the circuit board 180 through the second air outlet section 196, to cool and reduce the temperature for the driving member 150, the circuit board 180 and the electromagnetic component 160 at the same time.

In some embodiments, the first air outlet section 194 comprises the first air outlet 120, and the second air outlet section 196 comprises a second air outlet 130.

In some embodiments, the second chamber 114 is located between the first chamber 112 and the third chamber 116.

In the embodiment, the cooperating structures of the first chamber 112, the second chamber 114 and the third chamber 116 are further defined, and the second chamber 114 is located between the first chamber 112 and the third chamber 116, and this arrangement facilitates the mounting and fixing of the driving member 150, the circuit board 180, the electromagnetic component 160 and the first fan blade 170, provides effective and reliable structural support for the driving member 150 to drive the first fan blade 170 to rotate through a driving shaft 220, and can ensure an effective connection between the circuit board 180 and the driving member 150.

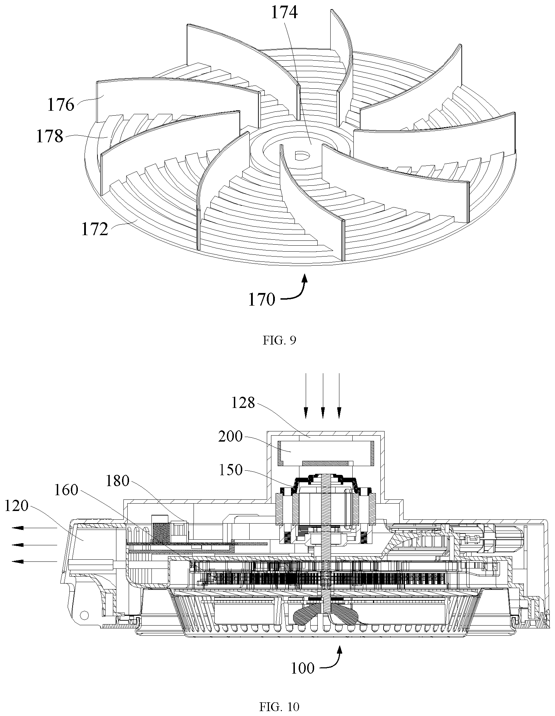

In some embodiments, as shown in FIG. 10, a second air inlet 128 is further provided in shell assembly 110; the cooking machine 100 further comprises a second fan 200, the second fan 200 is provided in the first chamber 112, and the second fan 200 communicates with the second air inlet 128 and the first chamber 112.

In the embodiment, the structure of the cooking machine 100 is further defined, the second air inlet 128 is further provided in shell assembly 110; the cooking machine 100 further comprises the second fan 200, the second fan 200 communicates with the second air inlet 128, and the second fan 200 communicates with the first chamber 112.

That is, the second fan 200 works and can drive the air in the environment to enter the first chamber 112 through the second air inlet 128, and the air is discharged out of the cooking machine 100 through the first air outlet 120. When flowing through the driving member 150 and the circuit board 180 in the first chamber 112, the air can bring the heat at the driving member 150 and the circuit board 180, to achieve the heat dissipating and cooling effects to the driving member 150 and the circuit board 180, and then reduce the environment temperature at the driving member 150 and the circuit board 180, and this helps reduce the temperature rise of the driving member 150 and the circuit board 180, and further helps prolong the service life of the driving member 150 and the circuit board 180.

In some embodiments, the second fan 200 is an axial-flow fan.

In some embodiments, as shown in FIG. 10, the second fan 200 is located between the second air inlet 128 and the driving member 150.

In the embodiment, the cooperating structures of the second fan 200, the second air inlet 128 and the driving member 150 are further defined, and the second fan 200 is located between the second air inlet 128 and the driving member 150, i.e., the second fan 200 is located on the top portion of the driving member 150, to achieve the purpose of dissipating heat for the top portion of the driving member 150. The arrangement is beneficial to shorten the distance between the second air inlet 128 and the driving member 150, and the cold air entering the first chamber 112 through the second air inlet 128 can rapidly contact the driving member 150, and this helps reduce cooling loss and helps improve the heat dissipation efficiency of the driving member 150.

In some embodiments, as shown in FIG. 11, the shell assembly 110 is further provided with the second air outlet 130; the cooking machine 100 further comprises a third fan 210, the third fan 210 is provided in the first chamber 112, and the third fan 210 communicates with the first chamber 112 and the second air outlet 130.

In the embodiment, the structure of the cooking machine 100 is further defined, the shell assembly 110 is further provided with the second air outlet 130; the cooking machine 100 further comprises the third fan 210, the third fan 210 communicates with the second air outlet 130, and the third fan 210 communicates with the first chamber 112.

That is, the third fan 210 works and can drive the air in the first chamber 112 to be discharged out of the cooking machine 100 through the second air outlet 130. When flowing through the driving member 150 and the circuit board 180 in the first chamber 112, the air can bring the heat at the driving member 150 and the circuit board 180, to achieve the heat dissipating and cooling effects to the driving member 150 and the circuit board 180, and then reduce the environment temperature at the driving member 150 and the circuit board 180, and this helps reduce the temperature rise of the driving member 150 and the circuit board 180, and further helps prolong the service life of the driving member 150 and the circuit board 180.

That is, the third fan 210 works and can blow air to the second air outlet 130 through the first chamber 112, to dissipate heat for the driving member 150 and the circuit board 180.

In some embodiments, as shown in FIG. 11, the driving member 150 is located between the third fan 210 and the first fan blade 170, and the second air outlet 130 is located at the side portion of the third fan 210.

In the embodiment, the cooperating structures of the third fan 210, the second air outlet 130 and the driving member 150 are further defined, and the driving member 150 is located between the third fan 210 and the first fan blade 170, and the second air outlet 130 is located at the side portion of the third fan 210. That is, the third fan 210 is located on the top portion of the driving member 150, to achieve the purpose of dissipating heat for the top portion of the driving member 150. The arrangement is beneficial to shorten the distance between the second air outlet 130 and the driving member 150, and helps improve the heat dissipation efficiency of the driving member 150.

In addition, the second air outlet 130 is located at the side portion of the third fan 210, and this arrangement can ensure the aesthetic and streamlined appearance of a product.

In some embodiments, as shown in FIG. 12, the cooking machine 100 further comprises: a driving shaft 220, and the first end of the driving shaft 220 is connected to the driving member 150, the second end of the driving shaft 220 passes through the second chamber 114 and extends into the third chamber 116, and is connected to the first fan blade 170; a second fan blade 230, located in the first chamber 112, and the second fan blade 230 is connected to the driving shaft 220, and the second fan blade 230 is located between the driving member 150 and the electromagnetic component 160; the shell assembly 110 is further provided with a third air outlet 132, the third air outlet 132 communicates with the first chamber 12, and from the second fan blade 230 to the driving member 150, at least a portion of the third air outlet 132 is located above the driving member 150.

In the embodiment, the structure of the cooking machine 100 is further defined, and the cooking machine 100 further comprises the driving shaft 220 and the second fan blade 230.

The driving shaft 220 comprises the first end and the second end, the first end of the driving shaft 220 is connected to the driving member 150, the second end of the driving shaft 220 passes through the second chamber 114 and extends into the third chamber 116, and is connected to the first fan blade 170. The driving member 150 drives the driving shaft 220 to rotate, and the rotating of the driving shaft 220 can bring the first fan blade 170 and the second fan blade 230 to rotate.

The rotating of the driving shaft 220 can bring the first fan blade 170 to rotate, the rotating of the first fan blade 170 can drive the hot air to circulate in the third chamber 116, to achieve the purpose of cooking the food materials in the third chamber 116, or heating the articles in the third chamber 116 to disinfect the articles.

The rotating of the driving shaft 220 can bring the second fan blade 230 to rotate, and the rotating of the second fan blade 230 can drive the airflow in the first chamber 112 to flow to the third air outlet 132; when flowing through the driving member 150 and the circuit board 180 in the first chamber 112, the airflow can bring the heat at the driving member 150 and the circuit board 180, to achieve the heat dissipating and cooling effects to the driving member 150 and the circuit board 180, and to reduce the environment temperature at the driving member 150 and the circuit board 180, and this helps reduce the temperature rise of the driving member 150 and the circuit board 180, and further helps prolong the service life of the driving member 150 and the circuit board 180.

In addition, at least a portion of the third air outlet 132 is located above the driving member 150, to achieve the purpose of dissipating heat for the top portion of the driving member 150. The arrangement is beneficial to shorten the distance between the third air outlet 132 and the driving member 150, and helps improve the heat dissipation efficiency of the driving member 150.

In some embodiments, as shown in FIG. 6, FIG. 7, FIG. 8 and FIG. 9, the first fan blade 170 comprises: a flow guide plate 172, and the flow guide plate 172 is provided with a mounting part 174, and the driving member 150 is connected to the mounting part 174; a plurality of blades 176, and the plurality of blades 176 are connected to the side of the flow guide plate 172 away from the electromagnetic component 160, and the plurality of blades 176 are arranged separately along the circumferential direction of the mounting part 174; a convex rib 178, and the convex rib 178 and the plurality of blades 176 are provided at the same side of the flow guide plate 172.

In the embodiment, the structure of the first fan blade 170 is further defined, and the first fan blade 170 comprises the flow guide plate 172, the plurality of blades 176 and the convex rib 178.

The flow guide plate 172 is provided with the mounting part 174, the mounting part 174 is configured to cooperate with the driving member 150, and the driving member 150 drives the first fan blade 170 to rotate by the mounting part 174.

The plurality of blades 176 are connected to the side of the flow guide plate 172 away from the electromagnetic component 160, and the convex rib 178 and the plurality of blades 176 are provided at the same side of the flow guide plate 172. That is, the flow guide plate 172 is used as a mounting carrier of the plurality of blades 176 and the convex rib 178, and has the function of mounting and fixing the plurality of blades 176 and the convex rib 178.

The convex rib 178 cooperates with the flow guide plate 172, to form a convex-concave structure, and in the case of ensuring that overlapping area between the electromagnetic component 160 and the flow guide plate 172 is not changed, the arrangement increases the integral heat dissipation area of the first fan blade 170, and thus, can improve the heat exchanging efficiency between the first fan blade 170 and the air, can further improve the heat dissipation of the first fan blade 170, and helps improve the cooking efficiency or the disinfection efficiency of the cooking machine 100.

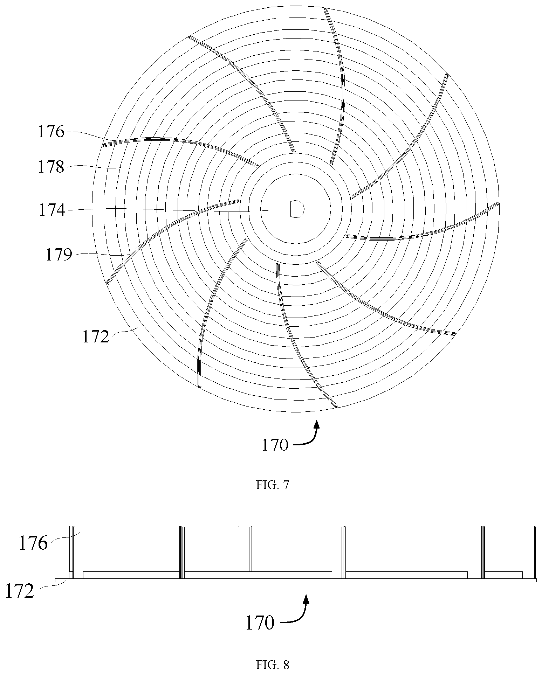

In some embodiments, as shown in FIG. 7 and FIG. 9, the convex rib 178 is a ring-shaped structure arranged surrounding the mounting part 174; there are a plurality of convex ribs 178, and the plurality of convex ribs 178 are arranged separately from the mounting part 174 to the outer edge of the flow guide plate 172.

In the embodiment, the structure and the number of the convex rib 178 are further defined.

In some embodiments, the convex rib 178 is the ring-shaped structure arranged surrounding the mounting part 174, i.e., the convex rib 178 is a ring-shaped structure, and the convex ribs 178 are arranged surrounding the mounting part 174.

In addition, there are a plurality of convex ribs 178, and the plurality of convex ribs 178 are arranged separately in a direction from the mounting part 174 to the outer edge of the flow guide plate 172.

The plurality of convex ribs 178 cooperates with the side of the flow guide plate 172 deviating from the electromagnetic component 160, to form a plurality of circles of convex-concave structures. Thus, in the case of ensuring that the overlapping area between the electromagnetic component 160 and the flow guide plate 172 is not changed, the integral heat dissipation area of the first fan blade 170 is increased, and this can enhance the heat exchanging efficiency between the first fan blade 170 and the air, and further improve the heat dissipation of the first fan blade 170, and thus the cooking effect is optimized through improving the heat dissipation efficiency, and this helps improve the cooking efficiency or the disinfection efficiency of the cooking machine 100.

In some embodiments, as shown in FIG. 7, the convex rib 178 is provided with a plurality of avoiding ports 179, each blade 176 is inserted into one avoiding port 179.

In the embodiment, the structure of the convex rib 178 is further defined, and the convex rib 178 is provided with the plurality of avoiding ports 179. In addition, the cooperating structure of the convex ribs 178 and the plurality of blades 176 is that each blade 176 is inserted into one avoiding port 179, the avoiding port 179 has the function of avoiding the blades 176 and the blades 176 can be effectively attached to the flow guide plate 172, and this can ensure the consistency of the heights of the plurality of blades 176, ensure the matching sizes of the plurality of blades 176 and the flow guide plate 172, and then the situation will not appear that part of the blades 176 interfere with other components of the cooking machine 100 due to the too large assembly height of such blades 176, and reliable structural support is provided for the effective and smooth rotation of the first fan blade 170.

In some embodiments, each blade 176 is arranged bending along the counterclockwise direction.

In the embodiment, the structure of the blade 176 is further defined, each blade 176 is arranged bending along the counterclockwise direction. The arrangement can increase the contact area between the blade 176 and the air, facilitate fully disturbing airflow, make the air sufficiently contact the first fan blade 170, and then help improve the efficiency of heating the air.

In some embodiments, as shown in FIG. 1 and FIG. 2, the shell assembly 110 comprises: a first cover body 134; a support plate 136, connected to the first cover body 134, and the support plate 136 is provided with an opening 1362; a heat insulation plate 138, provided on the support plate 136, and the heat insulation plate 138 covers the opening 1362, the first cover body 134, the support plate 136 and the heat insulation plate 138 enclose the second chamber 114, and the heat insulation plate 138 is located between the electromagnetic component 160 and the first fan blade 170.

In the embodiment, the structure of the shell assembly 110 is further detailed, and the shell assembly 110 comprises the first cover body 134, the support plate 136 and the heat insulation plate 138.

The support plate 136 is connected to the first cover body 134, the heat insulation plate 138 is provided on the support plate 136, and the heat insulation plate 138 covers the opening 1362. The support plate 136 is used as the mounting carrier of the heat insulation plate 138 and has the function of mounting and fixing the heat insulation plate 138, and the first cover body 134, the support plate 136 and the heat insulation plate 138 enclose the second chamber 114.

It is understandable that the heat insulation plate 138 is located between the electromagnetic component 160 and the first fan blade 170, the heat insulation plate 138 has a heat insulating function and reduces the heat transmitted to the second chamber 114 from the first fan blade 170, and this helps reduce the environment temperature at the electromagnetic component 160, and helps prolong the service life of the electromagnetic component 160. In addition, the heat insulation plate 138 can further insulate the oil fume produced during cooking, and thus reduce the probability of the occurrence that oil adheres to the electromagnetic component 160.

In some embodiments, the heat insulation plate 138 is a non-magnetic conductive material, for example, mica, glass or microcrystalline materials, etc. The heat insulation plate 138 is a non-magnetic conductive material and thus can reduce the interference to the magnetic field, and provide a structural support for the effective heating of the first fan blade 170.

In some embodiments, as shown in FIG. 1 and FIG. 2, the shell assembly 110 further comprises: a second cover body 140, connected to the first cover body 134, and the second cover body 140 and the first cover body 134 enclose the first chamber 112, the first air inlet 118 is provided in the second cover body 140, and the first cover body 134 and the second cover body 140 enclose the first air outlet 120.

In the embodiment, the shell assembly 110 further comprises the second cover body 140, the second cover body 140 is connected to the first cover body 134, the second cover body 140 is connected to the outer side of the first cover body 134.

The second cover body 140 and the first cover body 134 enclose the first chamber 112, i.e., the driving member 150 is located between the first cover body 134 and the second cover body 140, that is, the driving member 150 is arranged away from the first fan blade 170, and this arrangement can reduce the heat transmitted to the driving member 150, reduce the environment temperature at the driving member 150, help reduce the temperature rise of the driving member 150, and facilitate prolonging the service life of the driving member 150.

In some embodiments, as shown in FIG. 1 and FIG. 2, the shell assembly 110 further comprises: a protective cover 142, located in the third chamber 116, and the protective cover 142 is connected to the support plate 136, the protective cover 142 and the support plate 136 enclose a mounting chamber 144, the first fan blade 170 is located in the mounting chamber 144, and the protective cover 142 is provided with an overflow port 1422.

In the embodiment, the structure of the shell assembly 110 is further defined, the shell assembly 110 further comprises the protective cover 142, the protective cover 142 is located in the third chamber 116, and the protective cover 142 is connected to the support plate 136.

That is, the protective cover 142 cooperates with the support plate 136, to enclose the mounting chamber 144 for accommodating the first fan blade 170.

The protective cover 142 is provided with the overflow port 1422, the overflow port 1422 communicates with the third chamber 116 and the mounting chamber 144, and can ensure the circulation of hot air in the third chamber 116.

It is understandable that the protective cover 142 is connected to the support plate 136, to divide the mounting chamber 144 for accommodating the first fan blade 170 from the internal space of the third chamber 116, and this arrangement has a protecting function for the first fan blade 170 and can further ensure the circulation of the hot air in the third chamber 116.

In some embodiments, the cooking machine 100 comprises an air fryer or an air oven.

In the embodiment, the types of the cooking machine 100 are further defined, the cooking machine 100 comprises the air fryer or the air oven.

The arrows in FIG.10, FIG. 11 and FIG. 12shows the flowing direction of the air.

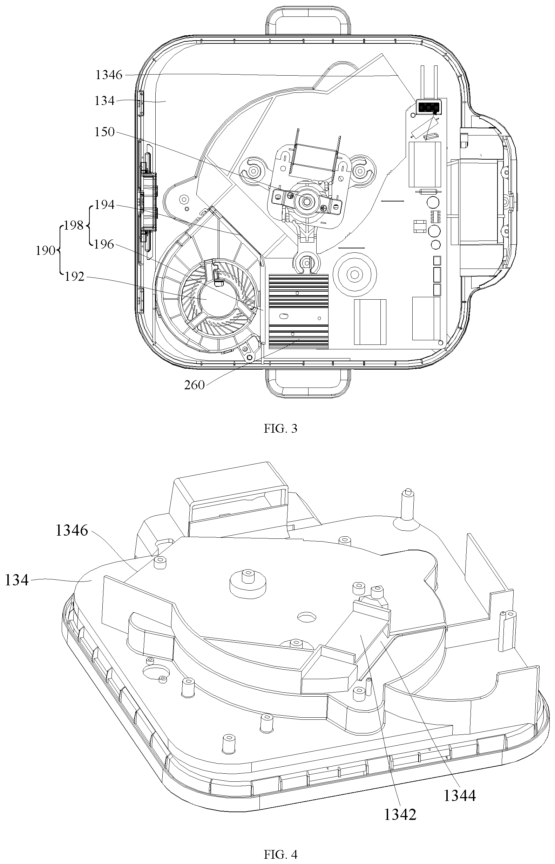

In some embodiments, as shown in FIG. 4, the shell assembly 110 comprises the first cover body 134, the first cover body 134 is provided with an upper air vent 1342, the lower air vent 1344 and an exit 1346. The exit 1346 communicates with the first air outlet 120. The upper air vent 1342 communicates with the first air outlet section 194, the lower air vent 1344 communicates with the second air outlet section 196, or the lower air vent 1344 communicates with the first air outlet section 194, and the lower air vent 1344 communicates with the second air outlet section 196.

In some embodiments, the driving member 150 comprises an electric motor, a motor, etc., which are not listed herein one by one.

In some embodiments, the third fan 210 is a centrifugal fan.

In some embodiments, the heat insulation plate 138 is a non-magnetic conductive material, for example, mica, glass or microcrystalline materials, etc. The heat insulation plate 138 is a non-magnetic conductive material and thus can reduce the interference to the magnetic field, and provide a structural support for the effective heating of the first fan blade 170.

In some embodiments, the protective cover 142 is a magnetic conductive component, i.e., the electromagnetic component 160 is electrified to generate a magnetic field, the magnetic field acts on the protective cover 142, the protective cover 142 heats to generate heat, and the protective cover 142 heats and can heat the air to form hot air.

The protective cover 142 is an iron cover. Or the protective cover 142 is an iron alloy cover, for example, a low carbon steel cover, an iron casting cover, an iron-aluminum alloy cover or an iron-nickel alloy cover, etc., which are not listed herein one by one.

In some embodiments, the first fan blade 170 is a magnetic conductive component, i.e., the electromagnetic component 160 is electrified to generate a magnetic field, the magnetic field acts on the first fan blade 170, the first fan blade 170 heats to generate heat, and the first fan blade 170 heats and can heat the air to form hot air. The driving member 150 drives the first fan blade 170 to rotate, to drive the hot air to circulate in the third chamber 116, and then achieve the purpose of cooking the food materials in the third chamber 116, or heating the articles in the third chamber 116 to achieve the purpose of disinfecting the articles.

The first fan blade 170 is an iron fan blade. Or the first fan blade 170 is an iron alloy fan blade, for example, a low carbon steel fan blade, an iron casting fan blade, an iron-aluminum alloy fan blade or an iron-nickel alloy fan blade, etc., which are not listed herein one by one.

In some embodiments, as shown in FIG. 1 to FIG. 5, the driving member 150 (for example, an electric motor) is fixed to the first cover body 134, the driving shaft 220 passes through the coil of the electromagnetic component 160, the first fan blade 170 which is used for generating heat is mounted on the driving shaft 220, and the first fan blade 170 rotates to form hot air frying.

The circuit board 180 is located at the electric motor. The first cover body 134 comprises an inner surface and an outer surface, the inner surface of the first cove body 134 is mounted with the coil, and the outer surface of the first cover body 134 is mounted with the electric motor and the circuit board 180. The lower air vent 134 of the first cover body 134 communicates with the inner surface of the first cover body 134, and the upper air vent 1342 of the first cover body 134 communicates with the outer surface of the first cover body 134. The first fan 190 (for example, the centrifugal fan) is mounted in the corner of the first cover body 134, the centrifugal fan comprises the first air outlet section 194 and the second air outlet section 196, and the first air outlet section 194 communicates with the upper air vent 1342 and the lower air vent 1344 of the first cover body 134, the second air outlet section 196 blows towards the heat sink 260 of the circuit board 180, to achieve the purpose of dissipating heat of the circuit board. 180.

The shell assembly 110 is provided with the first chamber 112, the second chamber 114 and the third chamber 116 therein.

The second chamber 114 is used for dissipating heat for the electromagnetic component 160. The airflow flows successively through the first air outlet section 194 of the fan, the lower air vent 1344 of the first cover body 134, the exit 1346 of the first cover body 134 and the first air outlet 120 of the second cover body 140.

In some embodiments, as shown in FIG. 6 and FIG. 9, when the cooking machine 100 works, the electromagnetic component 160 interacts with the first fan blade 170 with magnetic conductivity, and the temperature of the first fan blade 170 rises rapidly in a short period of time. Meanwhile, the first fan blade 170 is brought to rotate through the electric motor, a top-down airflow is generated around the first blade 170, to transfer the heat downwards to the third chamber 116; at the same time, a bottom-up airflow is generated in the inner ring area of the first fan blade 170, and then a circulating transfer of heat within the third chamber 116 is achieved.

The first fan blade 170 comprises the flow guide plate 172 and a plurality of blades 176. The flow guide plate 172 is a magnetic conductive component, or the blades 176 are magnetic conductive components, or the flow guide plate 172 and the blades 176 are all magnetic conductive components.

The flow guide plate 172 is provided with the convex rib 178, the convex rib 178 cooperates with the flow guide plate 172, to form a convex-concave structure, and in a precondition of ensuring that overlapping area between the coil of the electromagnetic component 160 and the first fan blade 170 is not changed, the integral heat dissipation area of the first fan blade 170 is increased to improve the heat exchanging efficiency between the first fan blade 170 and the air. Meanwhile, the number of the blades 176 is increased and the number of the blades 176 is greater than or equal to 7 (the number of the blades 176 is a single number, such as 7, 9, 11 or 13, which is not listed herein one by one), to increase the disturbing and heat exchanging area between the first fan blade 170 and the air, and then further improving the heat dissipation of the first fan blade 170. This helps enhance the heat dissipation effect and the heat efficiency, optimize the cooking effect and the disinfection effect, and improve the cooking efficiency and the disinfection efficiency.

In some embodiments, as shown in FIG. 10, an axial-flow fan is added on the top portion of the electric motor to conduct heat dissipation to the electric motor and the area under the electric motor.

In some embodiments, as shown in FIG. 11, a centrifugal fan is added on the top portion of the electric motor to conduct heat dissipation to the electric motor and the area under the electric motor.

In some embodiments, as shown in FIG. 12, an axial-flow fan or a centrifugal fan is added between the electric motor and the coil to conduct heat dissipation to the electric motor and the area under the electric motor.

In some embodiments, as shown in FIG. 1, the shell assembly 110 further comprises a base body 250, the cooking machine further comprises a carriage member 240, the carriage member 240 is configured to carry food materials or articles, and the carriage member 240 comprises a frying basket, a frying plate or a frying bucket.

In the present disclosure, the phrase of "a plurality of" indicates two or more than two, unless otherwise explicitly specified or defined. The terms of "mounting", "connected to", "connected", "fixing" and the like should be understood in a broad sense, for example, "connected" may be a fixed connection, and may further be a removable connection, or an integral connection; and "connected to" may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are comprised in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples. The descriptions above are only some embodiments of the present disclosure, and are not configured to limit the present disclosure. For a person skilled in the art, the present disclosure may have various changes and variations. Any modifications, equivalent substitutions, improvements, etc. made within the spirit and principle of the present disclosure shall all be comprised in the protection scope of the present disclosure.

## Claims

1. A cooking machine (100), comprising:
a shell assembly (110), wherein a first chamber (112) and a second chamber (114) are provided in the shell assembly (110), a first air inlet (118) and a first air outlet (120) are provided in the shell assembly (110), and the first air inlet (118) and the first air outlet (120) are communicated through any of the first chamber (112) and the second chamber (114);
a circuit board (180), provided in the first chamber (112);
an electromagnetic component (160), provided in the second chamber (114), wherein the electromagnetic component (160) is electrically connected to the circuit board (180); and
a heating component (270), provided in the shell assembly (110), wherein the electromagnetic component (160) is for driving the heating component (270) to generate heat.

2. The cooking machine (100) according to claim 1, further comprising:
a driving member (150), provided in the first chamber (112), wherein, the driving member (150) is electrically connected to the circuit board (180);
wherein the shell assembly (110) is further provided with a third chamber (116) therein, the cooking machine (100) further comprises a first fan blade (170), the first fan blade (170) is provided in the third chamber (116), and the driving member (150) is configured to drive the first fan blade (170) to rotate.

3. The cooking machine (100) according to claim 2, wherein, the heating component (270) forms the first fan blade (170); and/or
wherein, the heating component (270) comprises:
a heating plate (280), provided in the third chamber (116), wherein, the heating plate (280) is located between the first fan blade (170) and the electromagnetic component (160).

4. The cooking machine (100) according to claim 2 or 3, further comprising:
a first fan (190), provided in the shell assembly (110), wherein the first fan (190) comprises an air inlet section (192) and an air outlet structure (198), the air inlet section (192) communicates with the first air inlet (118), and both the first chamber (112) and the second chamber (114) communicate with the first air inlet (118) through the air outlet structure (198).

5. The cooking machine (100) according to claim 4, wherein, the air outlet structure (198) comprises a first air outlet section (194) and a second air outlet section (196);
wherein the second chamber (114) communicates with the first air outlet section (194), and a portion of the first air outlet section (194) is arranged opposite to the driving member (150); and
the second air outlet section (196) is arranged opposite to the circuit board (180).

6. The cooking machine (100) according to claim 2 or 3, wherein, the second chamber (114) is located between the first chamber (112) and the third chamber (116).

7. The cooking machine according to claim 2 or 3, wherein, a second air inlet (128) is further provided in shell assembly (110);
the cooking machine (100) further comprises a second fan (200), the second fan (200) is provided in the first chamber (112), and the second air inlet (128) and the first chamber (112) are communicated through the second fan (200); preferably, the second fan (200) is located between the second air inlet (128) and the driving member (150).

8. The cooking machine (100) according to claim 2 or 3, wherein, the shell assembly (110) is further provided with a second air outlet (130);
the cooking machine (100) further comprises a third fan (210), the third fan (210) is provided in the first chamber (112), and the first chamber (112) and the second air outlet (130) are communicated through the third fan (210); preferably, the driving member (150) is located between the third fan (210) and the first fan blade (170), and the second air outlet (130) is located at a side portion of the third fan (210).

9. The cooking machine (100) according to claim 2 or 3, further comprising:
a driving shaft (220), wherein a first end of the driving shaft (220) is connected to the driving member (150), a second end of the driving shaft (220) passes through the second chamber (114) and extends into the third chamber (116), and is connected to the first fan blade (170);
a second fan blade (230), located in the first chamber (112), wherein the second fan blade (230) is connected to the driving shaft (220), and the second fan blade (230) is located between the driving member (150) and the electromagnetic component (160);
the shell assembly (110) is further provided with a third air outlet (132), the third air outlet (132) communicates with the first chamber (112), and from the second fan blade (230) to the driving member (150), at least a portion of the third air outlet (132) is located above the driving member (150).

10. The cooking machine according to claim 2 or 3, wherein, the first fan blade (170) comprises:
a flow guide plate (172), wherein the flow guide plate (172) is provided with a mounting part (174), and the driving member (150) is connected to the mounting part (174);
a plurality of blades (176), wherein the plurality of blades (176) are connected to a side of the flow guide plate (172) away from the electromagnetic component (160), and the plurality of blades (176) are arranged separately along a circumferential direction of the mounting part (174);
a convex rib (178), wherein the convex rib (178) and the plurality of blades (176) are provided at a same side of the flow guide plate (172).

11. The cooking machine according to claim 10, wherein, the convex rib (178) is a ring-shaped structure arranged surrounding the mounting part (174);
the number of ribs is plural, and the plurality of convex ribs (178) are arranged separately from the mounting part (174) to an outer edge of the flow guide plate (172); preferably , the convex rib (178) is provided with a plurality of avoiding ports (179), each blade (176) is inserted into one avoiding port (179).

12. The cooking machine (100) according to claim 10, wherein, each blade (176) is arranged bending along a counterclockwise direction.

13. The cooking machine (100) according to claim 2 or 3, wherein, the shell assembly (110) comprises:
a first cover body (134);
a support plate (136), connected to the first cover body (134), wherein the support plate (136) is provided with an opening (1362);
a heat insulation plate (138), provided on the support plate (136), wherein the heat insulation plate (138) covers the opening (1362), the first cover body (134), the support plate (136) and the heat insulation plate (138) enclose the second chamber (114), and the heat insulation plate (138) is located between the electromagnetic component (160) and the first fan blade (170).

14. The cooking machine according to claim 13, wherein, the shell assembly (110) further comprises:
a second cover body (140), connected to the first cover body (134), wherein the second cover body (140) and the first cover body (134) enclose the first chamber (112), the first air inlet (118) is provided in the second cover body (140), and the first cover body (134) and the second cover body (140) enclose the first air outlet (120); and/or
the shell assembly (110) further comprises:
a protective cover (142), located in the third chamber (116), wherein the protective cover (142) is connected to the support plate (136), the protective cover (142) and the support plate (136) enclose a mounting chamber (144), the first fan blade (170) is located in the mounting chamber (144), and the protective cover (142) is provided with an overflow port (1422).

15. The cooking machine (100) according to any one of claims 1 to 3, wherein, the cooking machine (100) comprises an air fryer or an air oven.
